# EUROPÄISCHE PATENTSCHRIFT

(11) **EP 4 302 953 B1**
(45) Veröffentlichungstag und Bekanntmachung des Hinweises auf die Patenterteilung: **08.05.2024**
(21) Anmeldenummer: 23179968.5
(22) Anmeldetag: 19.06.2023
(51) Int. Cl.: B29B 9/06, B29C 48/05, B29C 48/00, B29C 48/345, B29C 48/92, B29C 48/04, B29C 48/25

(54) **GRANULIERER MIT EINSTELLMECHANISMUS FÜR MESSERANORDNUNG**
PELLETIZER WITH ADJUSTMENT MECHANISM FOR KNIFE ASSEMBLY
GRANULATEUR AVEC MÉCANISME DE RÉGLAGE POUR SYSTÈME DE COUTEAUX

(30) Priorität: 07.07.2022 DE 102022117002
(43) Veröffentlichungstag der Anmeldung: 10.01.2024
(73) Patentinhaber: Maag Germany GmbH, 63762 Großostheim (DE)
(72) Erfinder: BUCHHOLZ, Dominik, 47638 Straelen (DE); ELOO, Michael, 46509 Xanten (DE); SLADKY, Patrick, 47608 Geldern (DE); VELTEL, Jürgen, 47626 Kevelaer (DE)
(74) Vertreter: Thoma, Michael

(56) Entgegenhaltungen:
- EP-A1- 2 067 591
- EP-B1- 2 442 954
- WO-A1-2020/107050
- WO-A2-01/94088
- WO-A2-02/100621
- DE-A1- 1 964 413
- JP-A- H0 752 152

## Beschreibung

Die vorliegende Erfindung betrifft einen Granulierer mit einem rotierend antreibbaren Messerkopf zum Zerteilen von aus einem Lochkorpus austretenden Materialsträngen zu Granulat, wobei der Messerkopf über eine Antriebswelle mit einem Antriebsmotor antriebsverbunden ist, sowie mit einer Zustellvorrichtung zum axialen Verstellen des Messerkopfs relativ zum Lochkorpus in Richtung der Messerkopfdrehachse.

Solche Granulierer sind in verschiedenen Ausbildungen bekannt, beispielsweise zum Granulieren von Kunststoffen, wobei Schmelzestränge aus Polymermaterial, die aus düsenförmigen Bohrungen bzw. Durchgangslöchern einer Lochplatte austreten, von den Messern eines Messerkopfs abgeschlagen und zu Granulat zerkleinert werden, die durch den rotierenden Messerkopf an der Lochplatte vorbeistreichen. Dabei kann der Granulierer nass arbeiten, wobei beispielsweise bei einem Unterwassergranulierer der Messerkopf in einer Schneidkammer läuft, die von Prozesswasser bzw. einer Prozessflüssigkeit durchspült wird, um das zerkleinerte Granulat vom Verkleben und Anbacken abzuhalten und aus der Schneidkammer abzutransportieren. Ebenfalls nass arbeitet ein Wasserring-Granulierer, wobei dort die Messer nicht in einem Wasserbad laufen, sondern umfangsseitig von einem ringförmigen, vorbeiströmenden Wasserstrom umschlossen sind, der die abgeschlagenen Pellets mitreißt und abtransportiert und dabei abkühlt, um eine Verfestigung einzuleiten. Die umlaufenden Messer schneiden die aus der Lochplatte stirnseitig austretenden Schmelzestränge an sich trocken ab und schleudern die noch heißen, schmelzeförmigen Granulate in den umlaufenden Wasserring, wobei wie beim Unterwassergranulierer nicht zwangsweise Wasser als Prozessflüssigkeit verwendet werden muss, was gleichwohl der Fall sein kann, sondern es können auch andere Flüssigkeiten oder Gemische oder Wasser mit Zusätzen versetzt verwendet werden.

Andererseits können solche Granulierer auch trocken arbeiten, wobei beispielsweise bei Luft- bzw. Kühlluftgranulierern der Heißabschlag trocken erfolgt, wobei hier ebenfalls ein rotierendes Messer an einer Lochplatte entlangstreichen kann, um die aus den Kanalmündungen austretenden Schmelzestränge abzuschlagen. Das heiß abgeschlagene Granulat wird durch einen Luftstrom weiterbefördert und gekühlt, was durch die geringere Wärmeleitfähigkeit von Luft gegenüber Wasser jedoch länger dauert.

Der Lochkorpus, aus dem die Schmelzestränge austreten, muss dabei nicht zwangsweise die Form einer ebenen Platte haben, sondern kann ggf. auch eine kegelige oder gewölbte Konturierung besitzen, wobei gleichwohl ein plattenförmiger Lochkorpus für viele Anwendungen vorteilhaft ist. Unabhängig hiervon müssen die Granulierer auch nicht zwangsweise Kunststoffschmelzen granulieren, sondern können auch andere pastöse Materialstränge zu Granulat zerkleinern, beispielsweise pastöse Massen im Lebensmittelbereich oder mit pharmazeutischen Wirkstoffen.

Für den Granulierprozess ist die axiale Stellung des Messerkopfs relativ zum Lochkorpus aus verschiedenen Gründen von Bedeutung. Üblicherweise sollen die Messer mit einer vorbestimmten Anstellkraft gegen die Schneidfläche des Lochkorpus gedrückt bzw. gespannt werden, so dass die Messer präzise über die Schneidfläche schaben. Dabei müssen die beim Schnitt auftretenden Rückstellkräfte aufgenommen werden, die beispielsweise je nach Anstellwinkel der Messer variieren können.

Je nach Anwendung mit beispielsweise verschiedenen Materialien, die es zu granulieren gilt, oder je nach Verwendung verschiedener Messerköpfe bzw. Messern kann es notwendig werden, die axiale Position und/oder die Zustellkräfte zu verändern und an die jeweilige Anwendung bzw. den verwendeten Messerkopf anzupassen. Auch durch Verschleiß wird es notwendig, den Messerkopf nachzustellen, wenn sich die Messer abnutzen.

Die axiale Verstellung des Messerkopfs relativ zum Lochkorpus in Richtung der Drehachse kann dabei in verschiedener Art und Weise bewerkstelligt werden. Beispielsweise ist es bekannt, mechanische oder hydraulische bzw. pneumatische Federeinrichtungen zu verwenden, die den Messerkopf gegen die Schneidfläche des Lochkorpus treiben, wobei beispielsweise der Messerkopf über ein Keilwellenprofil oder eine ähnliche axial verstellbare, drehmomentübertragende Verbindung axial verschieblich auf der Antriebswelle sitzen und die besagte Antriebswelle hohl ausgebildet sein kann, um beispielsweise mit einem federvorgespannten Bewegungsstab gegen den Messerkopf zu drücken, vgl. beispielsweise DE 196 47 396 C2 oder DE 296 24 638 U1.

Andererseits ist es auch bekannt, die axiale Verstellung des Messerkopfs motorisch angetrieben zu bewerkstelligen. Beispielsweise zeigt die Schrift EP 20 67 591 A1 einen Unterwassergranulierer, dessen Antriebswelle in einem axial verstellbaren Lager gehalten ist, das mit einer Zahnstange verbunden ist, die durch ein Ritzel verstellt werden kann. Das besagte Ritzel wird über eine Getriebestufe durch einen Pneumatikzylinder angetrieben. Die genannte Schrift verspricht sich vom pneumatischen Antrieb geringere Schwankungen des Haltemoments im Stillstand, allerdings kommt es durch den Pneumatikzylinder zu recht hohen Wirkungsgradverlusten, insbesondere wenn mit hohen Drücken gearbeitet wird, die notwendig sind, um den Messerkopf ausreichend steif zu fixieren. Hinzu kommt, dass die Stellkräfte über das Zahnstangenprofil einseitig eingeleitet werden, was zu Verspannungen der Lageranordnung führt und Steifigkeits- und Effizienzverluste mit sich bringt.

Einen Granulierer nach dem Oberbegriff von Anspruch 1 zeigt die Schrift WO 02/100621 A2, die die Vorspannung, mit der die Messer des Granulierkopfs an der Lochplatte anliegen, in Abhängigkeit vom Drehmoment des Antriebsmotors eingestellt werden soll. Diese Vorspannung wird über eine Zustellvorrichtung mit einer Spindelantriebsstufe aufgebracht, deren Rohrmutter von einem Servomotor über eine Getriebestufe rotatorisch verstellt werden kann.

Weitere Granulierer mit Zustellvorrichtungen zum Zustellen des Messerkopfs, die Getriebestufen umfassen, sind ferner aus den Schriften WO 2020/107050 A1, WO 01/94088 A2, EP 2 067 591 A1, DE 19 64 413 A1 und JP H07 52152 A bekannt.

Aus der Schrift EP 12 86 811 B1 ist ferner ein Granulierer bekannt, dessen Messerkopf mittels eines Servomotors axial verstellt werden kann. Dabei treibt der Servomotor über eine Schneckengetriebestufe eine Gewindehülse rotatorisch an, deren Rotationsbewegung eine damit in Schraubeingriff stehende Gewindespindel axial verstellt. Die Axialbewegung der Gewindespindel wird über einen Querbolzen auf eine Lagerhülse übertragen, in der die Antriebswelle axial fest, drehbar gelagert ist. Durch den besagten Querbolzen wird die Stellkraft jedoch nur punktuell und exzentrisch auf die Lagerhülse der Antriebswelle gegeben, was ebenfalls zu Lagerverspannungen und Steifigkeits- sowie Effizienzverlusten führt. Zudem baut der Antriebsstrang zwischen Servomotor und Lagerhülse durch die exzentrische, quer beabstandete Anordnung der Spindelantriebsstufe und der damit in Verbindung stehenden Schneckenradstufe sperrig, so dass die Selbsthemmung, die sich der Schrift von der Ausbildung der mehreren Getriebestufen verspricht, teuer erkauft ist.

Ferner ist aus der Schrift EP 24 42 954 B1 ein Unterwassergranulator bekannt, der den Messerkopf ebenfalls motorisch verstellt. Der Verstellmotor sitzt dabei quer beabstandet neben der Hauptantriebswelle und treibt über einen Riemen eine Spindeltriebstufe an, die koaxial zur Hauptantriebswelle sitzt und einen Bewegungsstab axial verstellen kann, der durch die hohl ausgeführte Hauptantriebswelle auf den Messerkopf einwirken kann. Der genannte Bewegungsstab ist dabei durch den Hauptantriebsmotor hindurchgeführt, um die Spindelantriebsstufe auf der Rückseite des Hauptantriebsmotors, d.h. auf der dem Messerkopf abgewandten Seite anordnen und mit dem Bewegungsstab verbinden zu können. Dies erfordert einen speziell ausgebildeten Hauptantriebsmotor mit einer zu beiden Stirnseiten durchgängig hohl gebohrten Antriebswelle und führt zudem zu einer axial sehr lang bauenden Struktur.

Hiervon ausgehend liegt der vorliegenden Erfindung die Aufgabe zugrunde, einen verbesserten Granulierer der genannten Art zu schaffen, der Nachteile des Standes der Technik vermeidet und Letzteren in vorteilhafter Weise weiterbildet. Insbesondere soll eine steife und energieeffiziente axiale Verstellung des Messerkopfs erzielt werden, ohne hierfür eine kompakte Bauweise opfern zu müssen oder einen speziell ausgebildeten Hauptantrieb zu benötigen.

Die genannte Aufgabe wird erfindungsgemäß durch einen Granulierer gemäß Anspruch 1 gelöst. Bevorzugte Ausgestaltungen der Erfindung sind Gegenstand der abhängigen Ansprüche.

Es wird also vorgeschlagen, die Spindeltriebstufe zum axialen Verstellen des Messerkopfs zwischen Hauptantriebsmotor und Messerkopf direkt auf die Antriebswelle zu setzen, um die rotierende Antriebswelle selbst axial zu verstellen. Hierdurch kann auf einen durch den gesamten Antriebsstrang hindurchtretenden Bewegungsstab verzichtet werden und der Hauptantrieb braucht nicht als Hohlwellenmotor ausgebildet werden. Erfindungsgemäß ist das Spindelelement der Spindelantriebsstufe der Zustellvorrichtung als Spindelhülse ausgebildet, die zwischen dem Antriebsmotor und dem Messerkopf auf der rotierenden Antriebswelle axial festsitzt, wobei die genannte Antriebswelle axial fest und drehfest mit dem Messerkopf verbunden ist und die Axialbewegung der Spindelhülse auf den Messerkopf überträgt. Anders als im Stand der Technik wird die axiale Stellbewegung des Spindelelements nicht über Querbolzen von einer exzentrischen Spindelantriebsordnung her punktuell eingeleitet oder über separate Bewegungsstangen von der Rückseite des Hauptantriebs her auf den Messerkopf übertragen, sondern direkt auf die rotierend antreibbare Antriebswelle übertragen, sodass ein günstiger Kraftfluss und damit eine hohe Steifigkeit und Energieeffizienz der Zustellvorrichtung erreicht werden kann. Gleichzeitig kann eine kompakte Bauweise verwirklicht werden, die den Antriebsstrang über den Hauptantriebsmotor axial hinaus nicht zu verlängern braucht. Gleichzeitig kann auf spezielle Ausbildungen des Hauptantriebs, insbesondere einen Hohlwellenmotor verzichtet werden, obwohl ein solcher gleichwohl natürlich verwendbar bleibt.

In Weiterbildung der Erfindung ist die genannte Rohrmutter der Spindelantriebsstufe, die ebenfalls koaxial über der Antriebswelle sitzt, drehbar, aber axial fest gelagert, beispielsweise an einer Gehäuse- und/oder Chassisbaugruppe, die um die Antriebswelle herum oder benachbart zur Antriebswelle zwischen Antriebsmotor und Messerkopf vorgesehen sein kann.

Das als Spindelhülse ausgebildete Spindelelement kann ebenfalls an der genannten Gehäuse- und/oder Chassisbaugruppe gelagert sein. Unabhängig hiervon ist das Spindelelement aber axial verschieblich, jedoch drehfest gelagert, sodass eine rotatorische Bewegung der Rohrmutter in eine axiale Bewegung des Spindelelements umgesetzt wird.

Das genannte Spindelelement kann in vorteilhafter Weiterbildung der Erfindung an der Antriebswelle axial fest, aber drehbar gehalten sein, sodass die Antriebswelle sich unter der Spindelhülse hinwegdrehen kann, jedoch Axialbewegungen der Spindelhülse exakt folgt.

Um quer zur Drehachse schlank bauen zu können, kann in vorteilhafter Weiterbildung der Erfindung eine axial versetzte Anordnung der Lagerbaugruppen für die Rohrmutter einerseits und für das Spindelelement andererseits vorgesehen sein. Insbesondere kann eine Lagerbaugruppe zum drehbaren, axial festen Lagern der Rohrmutter axial versetzt und/oder bei radialer Betrachtung überlappungsfrei positioniert und/oder beabstandet von einer Lagerbaugruppe zum axial festen, drehbaren Lagern des Spindelelements an der Antriebswelle vorgesehen sein. Alternativ oder zusätzlich kann die genannte Lagerbaugruppe zum drehbaren, axial festen Lagern der Rohrmutter auch axial versetzt sein und/oder überlappungsfrei positioniert sein und/oder beabstandet sein von einer Lagerbaugruppe, die das genannte Spindelelement axial verschieblich, aber drehfest lagert, insbesondere an der vorgenannten Gehäuse- und/oder Chassisbaugruppe.

Unabhängig vom genannten Versatz der Rohrmutter-Lagerbaugruppe können die Lager zwischen Spindelelement und Antriebswelle einerseits und Spindelelement und Gehäuse- bzw. Chassisbaugruppe andererseits zueinander überlappend und/oder axial näherungsweise an derselben Position vorgesehen sein. Dies ermöglicht es, über die Spindelhülse eine radiale Abstützung der Antriebswelle zu erzielen.

Die Spindelantriebsstufe kann grundsätzlich verschieden ausgebildet sein, um die rotatorische Bewegung der Rohrmutter in eine axiale Bewegung des Spindelelements umzusetzen. Um auch bei hohen Stellkräften eine steife Positionierung des Messerkopfs bei gleichzeitig kompakter Ausbildung zu erzielen, kann die Spindelantriebsstufe in vorteilhafter Weiterbildung der Erfindung als Planetengewindegetriebe ausgebildet sein, wobei zwischen der Rohrmutter und dem Spindelelement Planetengewinderollen zum Umsetzen der Drehbewegung der Rohrmutter in eine Axialbewegung des Spindelelements vorgesehen sind.

Alternativ kann die Spindelantriebsstufe auch als Kugelgewindetrieb ausgebildet sein, wobei zwischen der Rohrmutter und dem Spindelelement anstelle der genannten Planetengewinderollen Kugeln zum Umsetzen der Drehbewegung der Rohrmutter in eine Axialbewegung des Spindelelements vorgesehen sein können. Ein solcher Kugelgewindetrieb gestattet eine sehr kurze Bauweise der Rohrmutter und zeigt auch bei höheren Verstellgeschwindigkeiten eine hohe Laufruhe, die keine Vibrationen auf die Antriebswelle überträgt.

Alternativ kann aber die Spindelantriebsstufe auch als Gewindeeingriffstrieb ausgebildet sein, wobei keine Wälzkörper zwischen Rohrmutter und Spindelelement vorgesehen sind, sondern ein an der Rohrmutter vorgesehenes Innengewinde direkt mit einem Außengewinde des Spindelelements kämmt. Dies gestattet eine besonders schlanke Bauweise der Spindelantriebsstufe.

Unabhängig von der konkreten Ausbildung der Spindelantriebsstufe kann deren Rohrmutter rotatorisch von einem Servomotor angetrieben werden, wobei zwischen Servomotor und Rohrmutter eine Ketten- oder Riementriebstufe vorgesehen sein kann, die es in einfacher Weise gestattet, den Servomotor quer beabstandet neben der Antriebswelle bzw. exzentrisch zum Hauptantriebsstrang anzuordnen, wobei der Servomotor mit seiner Motorwelle parallel zur Drehachse des Messerkopfs angeordnet sein kann.

In Weiterbildung der Erfindung kann die Kette oder der Riemen der genannten Ketten- bzw. Riementriebstufe ein Antriebsritzel antreiben, das stirnseitig drehfest an der Rohrmutter befestigt sein kann. Die Kette oder der Riemen läuft damit um die Antriebswelle herum bzw. erstreckt sich die axial zu verstellende Antriebswelle durch die Riementriebstufe hindurch. Durch eine stirnseitige Anordnung des Antriebsritzels an der Rohrmutter kann eine einfache Montage der Spindelantriebsstufe und der Riementriebstufe erreicht werden. Gleichzeitig kann die Rohrmutter zentral im Bereich, in dem die Stellkräfte auf das Spindelelement übertragen werden, stabil abgestützt werden.

Anstelle einer Ketten- oder Riemenstufe wäre es grundsätzlich aber auch möglich, die Rohrmutter über eine Stirnradgetriebestufe anzutreiben. Durch Verwendung einer Ketten- oder Riemenstufe kann bei schlanker Bauweise und größerer Freiheit bei der Anordnung des Servomotors ein effizienter Antrieb der Spindelantriebstufe bei gleichzeitig ruhigem Lauf erzielt werden.

Alternativ oder zusätzlich kann die Getriebestufe zwischen Servomotor und Rohrmutter aber auch berührungslos arbeitend ausgebildet sein und/oder eine Magnetgetriebe- und/oder -Kupplungsstufe umfassen. Beispielsweise kann eine Magnetgetriebestufe vorgesehen sein, die einerseits mit der Rohrmutter drehfest verbundene Permanentmagnete und andererseits mit einem dazu koaxial angeordneten Trommelelement verbundene Permanentmagnete aufweist. Insbesondere aber kann eine solche Magnetgetriebe- und/oder -Kupplungsstufe elektrodynamisch arbeitend ausgebildet sein und die Antriebsbewegung über Wirbelströme übertragen. Solche elektrodynamisch arbeitenden Magnetantriebs- und/oder -Kupplungsstufen sind beispielsweise als Retarder bzw. Wirbelstrombremsen bekannt bzw. in der Funktion ähnlich einem Elektromotor. Der Vorteil einer solchen magnetischen Getriebestufe liegen insbesondere darin, dass sie verschleißfrei arbeitet und auch hinsichtlich der Laufruhe ausgezeichnete Ergebnisse liefert.

Ist eine Ketten- oder Riemenstufe vorgesehen, kann der Servomotor mit seiner Motorwelle grundsätzlich direkt ein Antriebsritzel antreiben, welches die Kette oder den Riemen der genannten Ketten- bzw. Riemenstufe antreibt. In alternativer Weiterbildung der Erfindung kann aber zwischen dem Servomotor und dem genannten Antriebsritzel zum Antreiben der Kette oder des Riemens eine weitere Getriebestufe vorgesehen sein, die zwischen Servomotor und Antriebsritzel positioniert sein kann. Insbesondere kann eine solche zusätzliche Getriebestufe zwischen Antriebsritzel und Servomotor in den Servomotor bzw. ein gemeinsames Motor- und Getriebegehäuse integriert sein. Vorteilhafterweise kann die genannte zusätzliche Getriebestufe koaxial zur Motorachse des Servomotors angeordnet sein bzw. Getriebeeingangs- und -ausgangswellen aufweisen, die beide koaxial zur Servomotorwelle angeordnet sein können.

Um eine vom Servomotor einmal angefahrene axiale Stellung des Messerkopfs und/oder eine vom Servomotor bewirkte Zustellkraft des Messerkopfs stabil halten zu können, kann in Weiterbildung der Erfindung eine Haltebremse vorgesehen sein, die einen relevanten Teil des Verstellantriebsstrangs zwischen Spindelantriebsstufe und Servomotor blockieren kann bzw. festhalten oder fixieren kann.

Beispielsweise kann die genannte Haltebremse dazu vorgesehen bzw. ausgebildet sein, die Rohrmutter des Spindelantriebs rotatorisch zu blockieren bzw. festzuhalten und/oder das Spindelelement in Form der Spindelhülse axial zu blockieren bzw. festzuhalten. Durch Feststellen der Rohrmutter und/oder des Spindelelements kann eine besonders steife Einspannung des Messerkopfs in der vom Servomotor eingestellten Position erzielt werden, da Nachgiebigkeiten bzw. Elastizitäten im weiteren Antriebsstrang zwischen Rohrmutter und Servomotor umgangen werden bzw. keine Rolle mehr spielen.

Alternativ oder zusätzlich kann die Haltebremse aber auch ein näher zum Servomotor hin liegendes Antriebselement blockieren, um Übersetzungsverhältnisse auszunutzen und mit kleineren Haltekräften ein verlässliches Feststellen der Zustellvorrichtung zu ermöglichen. Beispielsweise kann das Antriebsritzel zum Antreiben der Kette und/oder des Riemens der Ketten- bzw. Riemenstufe und/oder ein Getriebeelement der Getriebestufe zwischen Antriebsritzel und Servomotor und/oder der Servomotor bzw. die Servomotorwelle selbst von der Haltebremse beaufschlagbar und festhaltbar sein.

Je nach Ausbildung des Granulierers kann die Lagerung der Antriebswelle, die neben ihrer rotatorischen Hauptbewegung auch axial verstellbar ist, zwischen

Spindelantriebsstufe und Messerkopf verschieden beschaffen sein, wobei alternativ oder zusätzlich zur Lagerung auch eine Dichtung vorgesehen sein kann, insbesondere wenn der Granulierer nass arbeitet, beispielsweise als Unterwassergranulierer ausgebildet ist.

In Weiterbildung der Erfindung kann die genannte axial verstellbare, rotatorisch antreibbare Antriebswelle in einem Schneidkammergehäuse, das eine Schneidkammer begrenzt, in der der Messerkopf aufgenommen ist, axial verschieblich und drehbar gelagert sein.

Je nach Anschluss des Messerkopfs muss es dabei nicht die Antriebswelle selbst sein, sondern es kann in vorteilhafter Weiterbildung auch eine Messerkopfaufnahme sein, die in der genannten Weise im Schneidkammergehäuse gelagert und dabei mit der Antriebswelle drehfest und axial fest verbunden ist.

Insbesondere kann eine Lagerbaugruppe zwischen Schneidkammergehäuse und Antriebswelle bzw. Messerkopfaufnahme eine radiale Abstützung der Antriebswelle/Messerkopfaufnahme am Schneidkammergehäuse vorsehen.

Unabhängig hiervon kann zwischen dem Schneidkammergehäuse und der Antriebswelle bzw. der Messerkopfaufnahme eine Dichtungsbaugruppe zum Abdichten der Schneidkammer im Bereich zwischen Schneidkammergehäuse und Antriebswelle/Messerkopfaufnahme vorgesehen sein, wobei die genannte Dichtungsbaugruppe in vorteilhafter Weiterbildung der Erfindung dazu ausgebildet sein kann, Axialbewegungen und Drehbewegungen der Antriebswelle und der Messerkopfaufnahme zuzulassen.

Insbesondere kann zwischen dem Schneidkammergehäuse und der Messerkopfaufnahme/Antriebswelle eine Führungsbuchse vorgesehen sein, an der die Messerkopfaufnahme bzw. die Antriebswelle durch zumindest ein Radiallager in Form eines Wälz- und/oder Gleitlagers radial abgestützt ist.

Die genannte Führungsbuchse ist dabei im Schneidkammergehäuse vorteilhafterweise axial verschieblich geführt, insbesondere durch ein oder mehrere Gleitlager, wobei die genannte Führungsbuchse gleichzeitig durch zumindest eine Dichtung gegenüber dem Schneidkammergehäuse abgedichtet sein kann. Die genannte Dichtung kann dabei in Form eines Dichtrings, beispielsweise in Form eines elastischen O-Rings ausgebildet sein.

Um auch zwischen Führungsbuchse und Messerkopfaufnahme bzw. Antriebswelle zu dichten, kann eine Gleitringdichtung vorgesehen sein, die an der Messerkopfaufnahme und/oder der damit verbundenen Antriebswelle montiert sein kann.

Insbesondere kann in der genannten Führungsbuchse die Messerkopfaufnahme radial gelagert und abgedichtet sein, wobei in vorteilhafter Weiterbildung der Erfindung die Messerkopfaufnahme mit zwei Kugellagern oder anderen Wälzlagern in der Führungsbuchse montiert sein kann. Zur Abdichtung kann auf der Messerkopfaufnahme eine Gleitringdichtung vorgesehen sein, die zusammen mit einer Dichtungsaufnahme die Messerkopfaufnahme zur Führungsbuchse hin abdichten kann.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Darstellung eines Unterwassergranulierers, die dessen Messerkopfantriebsvorrichtung und die Prozesswasseranschlüsse zum Durchspülen der Schneidkammer zeigen,
- Fig. 2:: einen Längsschnitt durch den Antriebsstrang zum rotatorischen Antreiben des Messerkopfs des Granulierers aus Fig. 1, die die Zustellvorrichtung zum axialen Verstellen des Messerkopfs zeigt, wobei die auf der rotierenden Antriebswelle sitzende Spindelantriebsstufe als Planetengewindegetriebe ausgebildet ist,
- Fig. 3:: einen Längsschnitt durch den Antriebsstrang ähnlich Fig. 2, wobei die Spindelantriebsstufe der Zustellvorrichtung zum axialen Verstellen des Messerkopfs als Schraubgewindetrieb ausgebildet ist, und
- Fig. 4:: einen Längsschnitt durch die Lager- und Dichtungsanordnung des Antriebsstrangs im Schneidkammergehäuse des Granulierers aus den vorhergehenden Figuren.

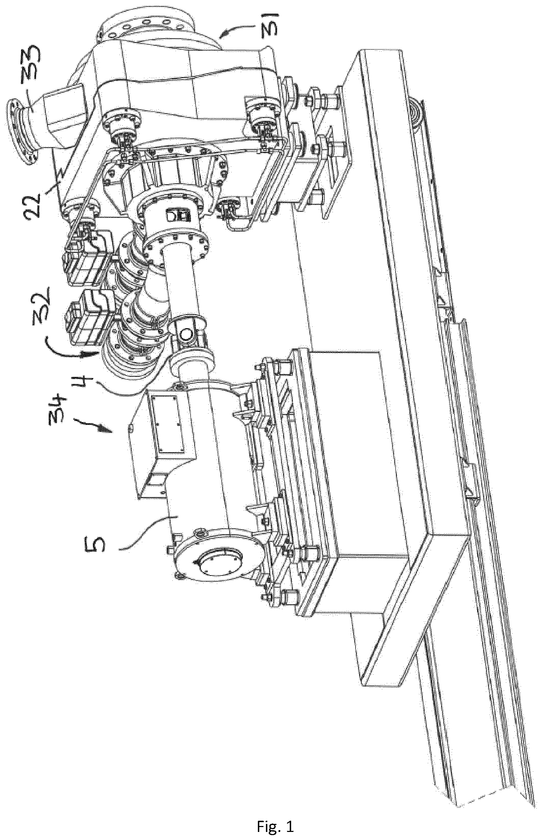

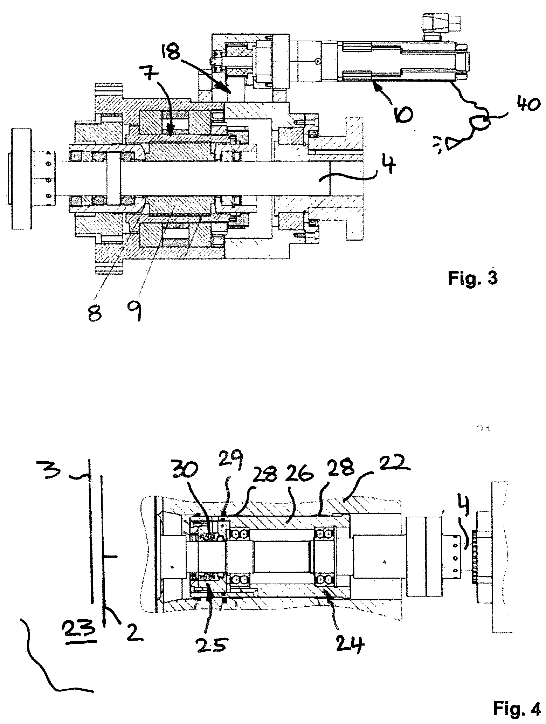

Wie Fig. 1 zeigt, kann der Granulierer 1 als Unterwassergranulierer ausgebildet sein und ein Schneidkammergehäuse 22 umfassen, in der eine Schneidkammer 23, vgl. Fig. 4, vorgesehen ist, in der ein Messerkopf 2 mit Messern aufgenommen ist. Über einen Schmelzezuführkopf 31, der an eine nicht dargestellte Schmelzezufuhreinrichtung beispielsweise umfassend einen Extruder angeschlossen werden kann, kann einer Lochplatte 3, die düsenartige Schmelzekanäle umfasst, geschmolzenes Kunststoffmaterial zugeführt werden, um Schmelzestränge durch die genannte Lochplatte 3 hindurchzudrücken bzw. aus der Lochplatte austreten lassen zu können. Die genannten Schmelzekanäle der Lochplatte 3 können auf deren Stirnseite münden, die eine Schneidfläche bildet und dem Messerkopf 2 zugewandt ist sowie in der Schneidkammer 23 angeordnet ist bzw. an diese grenzt.

Die Schneidkammer 23 kann dabei mit Prozesswasser durchspült werden, das beispielsweise über Einlässe 32 in die Schneidkammer 23 zugeführt werden kann und zusammen mit dem Granulat in Form eines Granulat-Prozesswasser-Gemischs über den Auslass 33 abgeführt werden kann.

Der genannte Messerkopf 2 kann von einem Hauptantrieb 34 rotatorisch um eine Messerkopfdrehachse 12 angetrieben werden, die sich beispielsweise senkrecht zur genannten Lochplatte 3 erstrecken kann. Der Hauptantrieb 34 kann einen Antriebsmotor 5 beispielsweise in Form eines Elektromotors umfassen, der über eine Antriebswelle 4 den Messerkopf 2 rotatorisch antreibt, vgl. Fig. 1.

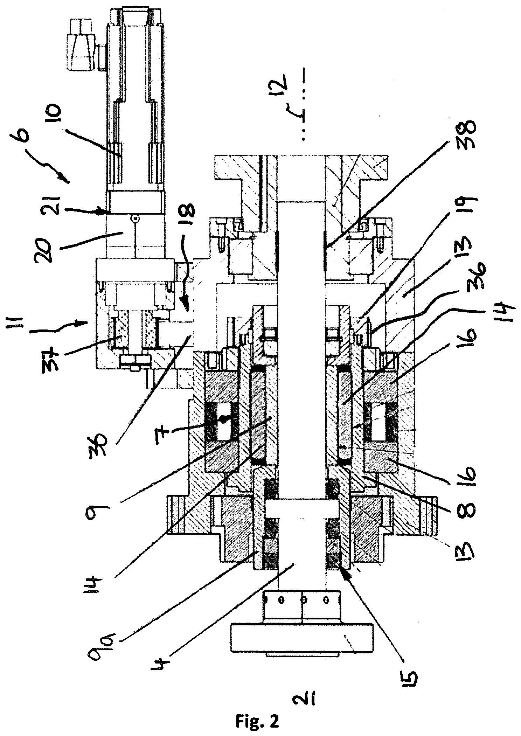

Zusätzlich zum Hauptantrieb 34 ist eine Zustellvorrichtung 6 umfassend einen Servomotor 10 zum axialen Verstellen des Messerkopfs 2 relativ zur Lochplatte 3 vorgesehen, vgl. Fig. 2 und 3.

Die genannte Zustellvorrichtung 6 umfasst dabei eine Spindelantriebsstufe 7, die zwischen Antriebsmotor 5 und Messerkopf 2 auf der Antriebswelle 4 sitzt, um die rotierend antreibbare Antriebswelle 4 selbst axial verstellen zu können. Die Antriebswelle 4 ist dabei drehfest und axialfest mit dem Messerkopf 2 verbunden, so dass die axiale Stellbewegung der Antriebswelle 4 zu einem Zustellen des Messerkopfs 2 in axialer Richtung führt.

Die Spindelantriebsstufe 7 umfasst dabei eine Rohrmutter 8 und ein in der Rohrmutter 8 sitzendes Spindelelement 9. Das genannte Spindelelement 9 ist dabei als Spindelhülse ausgebildet, die auf der Antriebswelle 4 sitzt, vgl. Fig. 2.

Wie in Fig. 2 gezeigt, kann die Spindelantriebsstufe 7 als Planetengewindetrieb ausgebildet sein, wobei zwischen der Rohrmutter 8 und dem Spindelelement 9 Planeten in Form von Planetengewinderollen vorgesehen sind, die eine Rotationsbewegung der Rohrmutter 8 in eine Axialbewegung des Spindelelements 9 umsetzen.

Wie Fig. 3 zeigt, kann die Spindelantriebsstufe 7 aber auch als Schraubgewindetrieb ausgebildet sein, bei dem zwischen Rohrmutter 8 und Spindelelement 9 keine Planeten vorgesehen sind, sondern ein Innengewinde der Rohrmutter 8 mit einem Außengewinde des Spindelelements 9 in Schraubeingriff steht.

Wie die Figuren 2 und 3 zeigen, kann die genannte Rohrmutter 8 an einer Gehäuse- und/oder Chassisbaugruppe 13 drehbar, aber axial fest gelagert sein, beispielsweise mittels einer Lagerbaugruppe 16 zwischen Rohrmutter 8 und Gehäuse bzw. Chassisbaugruppe 13, wobei die genannte Lagerbaugruppe 16 ein oder mehrere Wälzlager beispielsweise in Form eines Kegelrollenlagerpaars oder einer Radial- /Axiallagerpaarung umfassen kann. Gegebenenfalls sind aber auch Gleitlager zur drehbaren, axial festen Lagerung der Rohrmutter 8 möglich.

Das genannte Spindelelement 9 ist einerseits auf der Antriebswelle 4 abgestützt, wobei ein hierfür vorgesehenes Lager 15 axial fest, aber drehbar ausgebildet sein kann, so dass Axialbewegungen des Spindelelements 9 direkt auf die Antriebswelle 4 übertragen werden, Letztere sich aber in der Spindelhülse 9 drehen kann. Die genannte axial feste, drehbare Lagerbaugruppe 15 zwischen Antriebswelle 4 und Spindelelement 9 kann beispielsweise zwei Wälzlager und/oder Gleitlager aufweisen, die auf gegenüberliegenden Seiten eines Wellenvorsprungs 35 angeordnet sein können, wobei als Wälzlager beispielsweise Kegelrollenlager und/oder Kugellager und/oder Zylinderlager Verwendung finden können.

Die genannte axial feste Lagerbaugruppe 15 zwischen Antriebswelle 4 und Spindelelement 9 kann außerhalb der Rohrmutter 8 bzw. axial versetzt von der Lagerbaugruppe 16 für die Rohrmutter 8 angeordnet sein, vgl. Fig. 2 und 3.

Das Spindelelement 9 ist zwischen Antriebswelle 4 und Rohrmutter 8 bzw. ggf. zwischengeschalteter Planeten 14 radial abgestützt. Um das Spindelelement 9 drehfest, aber axial verschieblich zu halten, kann zwischen dem Spindelelement 9 und dem Gehäuse bzw. der Chassisbaugruppe 13 eine weitere Lagerbaugruppe 17 vorgesehen sein, die axial verschieblich, aber drehfest ausgebildet ist. Dies kann beispielsweise ein Keilwellenprofil oder eine Stiftführung an einem Verlängerungsabschnitt des Spindelelements 9 sein.

Zum rotatorischen Antreiben der Rohrmutter 8 der Spindelantriebsstufe 7 ist ein Servomotor 10 vorgesehen, der mit seiner Motorwelle parallel zur Drehachse 13 des Messerkopfs 2 bzw. der Antriebswelle 4 ausgerichtet und querversetzt neben der Antriebswelle 4 angeordnet sein kann, vgl. Fig. 2 und 3.

Um den Querversatz zwischen Servomotor 10 und Rohrmutter 8 zu überbrücken, kann eine Riemenstufe 18 vorgesehen sein, deren Riemen 36 ein Antriebsritzel 19 antreiben kann, das auf einer Stirnseite der Rohrmutter 8 montiert und damit drehfest verbunden sein kann. Das genannte Antriebsritzel 19 ist dabei als Hohlrad ausgebildet, durch das die Antriebswelle 4 hindurchtritt.

Der genannte Riemen 36 der Riemenstufe 18 wird andererseits von einem Antriebsritzel 37 angetrieben, das vom Servomotor 10 her rotatorisch antreibbar ist.

Dabei kann vorteilhafterweise zwischen dem Servomotor 10 und dem genannten Antriebsritzel 37 eine weitere Getriebestufe 20 vorgesehen sein, die mit ihren Getriebeeingangs- und -ausgangswellen koaxial zur Motorwelle des Servomotors 10 angeordnet sein und insbesondere in ein gemeinsames Motor-/Getriebegehäuse integriert sein kann, vgl. Fig. 2.

Zur axialen Verstellung des Messerkopfs 2 ergibt sich dabei folgender Kraftfluss: Der Servomotor 10 treibt über die Getriebestufe 20 die Riemenstufe 18 an, deren Antriebsriemen 36 über das Antriebsritzel 19. Die Drehbewegung der axial festen Rohrmutter 8 wird über die Planeten 14 gemäß Fig. 2 bzw. den Schraubgewindeeingriff gemäß Fig. 3 in eine Axialbewegung des Spindelelements 9 umgesetzt. Die Axialbewegung des axial fest auf der Antriebswelle 4 sitzenden Spindelelements 9 wird auf die genannte Antriebswelle 4 übertragen, die wiederum mit dem Messerkopf 2 drehfest und axial fest gekoppelt ist, so dass der Messerkopf 2 auf die Lochplatte 3 zu gestellt bzw. von dieser weggefahren werden kann.

Die rotatorische Antriebsbewegung vom Antriebsmotor 5 her kann dabei auf die Antriebswelle 4 durch eine Kupplung 38 übertragen werden, die drehfest aber axial beweglich ausgebildet ist und beispielsweise ein Keilwellenprofil 38 oder ein Verzahnungsprofil oder dergleichen umfassen kann.

Wie Figur 4 zeigt, kann der Antriebsstrang zur Schneidkammer 23 hin abgedichtet bzw. Im Schneidkammergehäuse 22 radial abgestützt bzw. gelagert sein.

Je nach Ausbildung des Granulierers 1 kann die Lagerung der Antriebswelle 4, die neben ihrer rotatorischen Hauptbewegung auch axial verstellbar ist, zwischen Spindelantriebsstufe 7 und Messerkopf 2 dabei verschieden beschaffen sein, wobei zusätzlich zur Lagerung auch eine Dichtung vorgesehen sein kann, insbesondere wenn der Granulierer 1 nass arbeitet, beispielsweise als Unterwassergranulierer ausgebildet ist.

Dabei kann die genannte axial verstellbare, rotatorisch antreibbare Antriebswelle 4 selbst im Schneidkammergehäuse 22, das die Schneidkammer 23 begrenzt, axial verschieblich und drehbar gelagert sein.

Je nach Anschluss des Messerkopfs muss es dabei nicht die Antriebswelle 4 selbst sein, sondern es kann in vorteilhafter Weiterbildung auch eine Messerkopfaufnahme sein, die in der genannten Weise im Schneidkammergehäuse 22 gelagert und abgedichtet sowie dabei mit der Antriebswelle 4 drehfest und axial fest verbunden ist.

Insbesondere kann eine Lagerbaugruppe 24 zwischen Schneidkammergehäuse 22 und Antriebswelle bzw. Messerkopfaufnahme eine radiale Abstützung der Antriebswelle/Messerkopfaufnahme am Schneidkammergehäuse 22 vorsehen.

Unabhängig hiervon kann zwischen dem Schneidkammergehäuse 22 und der Antriebswelle bzw. der Messerkopfaufnahme eine Dichtungsbaugruppe 29, 30 zum Abdichten der Schneidkammer 23 im Bereich zwischen Schneidkammergehäuse 22 und Antriebswelle/Messerkopfaufnahme vorgesehen sein, wobei die genannte Dichtungsbaugruppe 29, 30 Axialbewegungen und Drehbewegungen der Antriebswelle und der Messerkopfaufnahme zuläßt.

Insbesondere kann zwischen dem Schneidkammergehäuse 22 und der Messerkopfaufnahme/Antriebswelle eine Führungsbuchse 26 vorgesehen sein, an der die Messerkopfaufnahme bzw. die Antriebswelle durch zumindest ein Radiallager 24 in Form eines Wälz- und/oder Gleitlagers radial abgestützt ist, vgl. Fig. 4.

Die genannte Führungsbuchse 26 ist dabei im Schneidkammergehäuse 22 axial verschieblich geführt, insbesondere durch ein oder mehrere Gleitlager 28, wobei die genannte Führungsbuchse 26 gleichzeitig durch zumindest eine Dichtung 29 gegenüber dem Schneidkammergehäuse abgedichtet sein kann, vgl. Fig. 4. Die genannte Dichtung 29 kann dabei in Form eines Dichtrings, beispielsweise in Form eines elastischen O-Rings ausgebildet sein.

Um auch zwischen Führungsbuchse 26 und Messerkopfaufnahme bzw. Antriebswelle 4 zu dichten, kann eine Gleitringdichtung 30 vorgesehen sein, die an der Messerkopfaufnahme und/oder der damit verbundenen Antriebswelle montiert sein kann.

Insbesondere kann in der genannten Führungsbuchse 26 die genannte Messerkopfaufnahme radial gelagert und abgedichtet sein, wobei in vorteilhafter Weiterbildung der Erfindung die Messerkopfaufnahme mit zwei Kugellagern oder anderen Wälzlagern in der Führungsbuchse 26 montiert sein kann. Zur Abdichtung kann auf der Messerkopfaufnahme die genannte Gleitringdichtung 30 vorgesehen sein, die zusammen mit einer Dichtungsaufnahme die Messerkopfaufnahme zur Führungsbuchse 26 hin abdichten kann.

Wie aus dem Vorstehenden hervorgeht, zeichnet sich der Granulierer 1 insbesondere durch folgende Merkmale und Eigenschaften aus:
Die beschriebene Baugruppe ermöglicht es, eine, von einem externen Motor 5, angetriebene Welle 4 axial zu verschieben.

Die Baugruppe ermöglicht es, eine von einem externen Motor 5 angetriebene Welle 4 mit einer Zug- oder Druckkraft zu beaufschlagen.

Die Baugruppe ermöglicht es, eine verschiebbare Welle 4 an ihrer Position zu halten und externe Zug- oder Druckkraft aufzunehmen.

Durch die Regulierung des Drehmomentes vom Servomotor 10 kann die Zustellkraft stufenlos in beide Verfahr-Richtungen und unabhängig voneinander eingestellt werden.

Durch die Regulierung der Drehzahl des Servomotors 10 kann die Verfahrgeschwindigkeit stufenlos in beide Richtungen und unabhängig voneinander eingestellt werden.

Mit einer Haltebremse 21 kann die Position der Bewegungsstange auch bei Einwirkung von externen Kräften an ihrer Position gehalten werden.

Mit Hilfe eines integrierten, absoluten Encoders kann die Position der Bewegungsstange während des Betriebes gemessen und überwacht werden.

Über eine geeignete, insbesondere elektronische Steuerungsvorrichtung 40 können automatische Prozessabläufe programmiert werden, die bspw. Wartungsarbeiten und den Betrieb der Anlage erleichtern können, wie z.B.:
- Automatisches Einstellen der Messerkopfposition
- Anpassung des Messerverfahrweges an die aktuelle Verschleißhöhe der Schneidfläche
- Messung vom Lochplattenverschleiß / Messerverschleiß
- Rezepturabhängige Zustellkräfte
- An- und Abkoppeln der Schneidkammer ohne Zustellkräfte des Messerkopfs
- Verschiedene Betriebseinstellungen sind möglich: manuelles Verfahren der Messer, Zustellung über Drehmoment vom Hauptmotor, Zustellung über Drehmoment vom Servomotor (=Vorgabe der Zustellkraft); Zustellung in Weg pro Zeit

Es können Standardmotoren für den Hauptantrieb eingesetzt werden, wobei eine einfache Regelung von Position und Zustellkraft vorgesehen sein kann.

## Patentansprüche

1. Granulierer mit einem rotierend antreibbaren Messerkopf (2) zum Zerteilen von aus einem Lochkorpus (3) austretenden Materialsträngen zu Granulat, wobei der Messerkopf (2) über eine Antriebswelle (4) mit einem Antriebsmotor (5) antriebsverbunden ist, sowie mit einer Zustellvorrichtung (6) zum axialen Verstellen des Messerkopfs (2) relativ zum Lochkorpus (3) in Richtung der Messerkopfdrehachse (12), wobei die Zustellvorrichtung (6) eine Spindelantriebsstufe (7) umfasst, deren Rohrmutter (8) von einem Servomotor (10) über eine Getriebestufe (11) rotatorisch verstellbar ist, wobei die Antriebswelle (4) axial fest und drehfest mit dem Messerkopf (5) verbunden ist, **dadurch gekennzeichnet, dass** ein mit der Rohrmutter (8) getrieblich verbundenes Spindelelement (9) axial verstellbar ist, wobei das Spindelelement (9) als Spindelhülse ausgebildet ist, die zwischen dem Antriebsmotor (5) und dem Messerkopf (2) auf der rotierenden Antriebswelle (4) axial fest sitzt, wobei die genannte Antriebswelle die Axialbewegung der Spindelhülse auf den Messerkopf (2) überträgt.

2. Granulierer nach dem vorhergehenden Anspruch, wobei die Rohrmutter (8) an einer Gehäuse- und/oder Chassisbaugruppe (13) drehbar, aber axial fest gelagert ist, wobei das Spindelelement (9) an der Gehäuse- und/oder Chassisbaugruppe (13) axial verschieblich, aber drehfest gelagert ist und wobei die Antriebswelle (4) an dem Spindelelement (9) axial fest, aber drehbar gehalten ist.

3. Granulierer nach einem der vorhergehenden Ansprüche, wobei eine Lagerbaugruppe (16) zum drehbaren, axial festen Lagern der Rohrmutter (8) axial in Richtung der Messerkopfdrehachse (12) beabstandet ist von einer Lagerbaugruppe (15) zum axial festen, drehbaren Lagern des Spindelelements (15) an der Antriebswelle (4) und/oder von einer Lagerbaugruppe (17) zum axial verschieblichen, drehfesten Lagern des Spindelelements (9).

4. Granulierer nach einem der vorhergehenden Ansprüche, wobei die Spindelantriebsstufe (7)
- als Planetengewindetrieb ausgebildet ist, wobei zwischen der Rohrmutter (8) und dem Spindelelement (9) Planetengewinderollen (14) zum Umsetzen einer Drehbewegung der Rohrmutter (8) in eine Axialbewegung des Spindelelements (9) vorgesehen sind, oder
- als Kugelgewindetrieb ausgebildet ist, wobei zwischen der Rohrmutter (8) und dem Spindelelement (9) Kugeln zum Umsetzen einer Drehbewegung der Rohrmutter (8) in eine Axialbewegung des Spindelelements (9) vorgesehen sind, oder
- als Gewindeeingriffstrieb ausgebildet ist, wobei ein an der Rohrmutter (8) vorgesehenes Innengewinde mit einem Außengewinde des Spindelelements (9) kämmt.

5. Granulierer nach einem der vorhergehenden Ansprüche, wobei die Getriebestufe (11) zwischen dem Servomotor (10) und der Rohrmutter (8) eine Ketten- oder Riemenstufe (18), insbesondere eine Zahnriemenstufe, aufweist, wobei die genannte Ketten- oder Riemenstufe (18) ein Antriebsrad, insbesondere - ritzel (19) aufweist, das vorzugsweise an einer Stirnseite der Rohrmutter (8) drehfest mit der Rohrmutter (15) verbunden ist, und vorzugsweise zwischen der genannten Ketten- oder Riemenstufe (18) und dem Servomotor (10) eine zusätzliche Getriebestufe (20) vorgesehen, vorzugsweise in den Servomotor (10) integriert ist.

6. Granulierer nach einem der Ansprüche 1 bis 4, wobei die Getriebestufe (11) zwischen dem Servomotor (10) und der Rohrmutter (8) eine berührungslos arbeitende Magnetgetriebe- und/oder -Kupplungsstufe zum Übertragen von Drehmoment und Antriebsbewegung vom Servomotor (10) auf die Rohrmutter (8) aufweist, wobei die Magnetgetriebe- und/oder -Kupplungsstufe insbesondere elektrodynamisch, mit Wirbelströmen arbeitend ausgebildet ist.

7. Granulierer nach einem der vorhergehenden Ansprüche, wobei der Servomotor (10) quer versetzt zur Antriebswelle (4) angeordnet und/oder mit seiner Servomotorwelle parallel zur Antriebswelle (4) ausgerichtet ist.

8. Granulierer nach einem der vorhergehenden Ansprüche, wobei eine Haltebremse (21) zum rotatorischen Blockieren der Rohrmutter (8) und/oder zum axialen Blockieren des Spindelelements (9) vorgesehen ist, wobei die Haltebremse (21) insbesondere zum Blockieren des Servomotors (10) ausgebildet ist.

9. Granulierer nach einem der vorhergehenden Ansprüche, wobei die axial verstellbare, rotatorisch antreibbare Antriebswelle (4) und/oder eine damit verbundene Messerkopfaufnahme in einem Schneidkammergehäuse (22), das eine Schneidkammer (23), in der der Messerkopf (2) aufgenommen ist, begrenzt, axial verschieblich, drehbar gelagert ist, wobei eine Lagerbaugruppe (24) zwischen Schneidkammergehäuse (22) einerseits und Messerkopfaufnahme und/oder Antriebswelle (4) andererseits eine radiale Abstützung der Messerkopfaufnahme und/oder der Antriebswelle (4) am Schneidkammergehäuse (22) vorsieht.

10. Granulierer nach einem der beiden vorhergehenden Ansprüche, wobei zwischen der Messerkopfaufnahme und/oder Antriebswelle (4) einerseits und dem Schneidkammergehäuse (22) andererseits eine Dichtungsbaugruppe (25) zum Abdichten der Schneidkammer (23) im Bereich zwischen Messerkopfaufnahme und/oder Antriebswelle (4) einerseits und Schneidkammergehäuse (22) andererseits vorgesehen ist, wobei die genannte Dichtungsbaugruppe (25) dazu ausgebildet ist, Axialbewegungen und Drehbewegungen der Messerkopfaufnahme und/oder Antriebswelle (4) zuzulassen.

11. Granulierer nach einem der vorhergehenden Ansprüche, wobei zwischen dem Schneidkammergehäuse (22) einerseits und der Messerkopfaufnahme und/oder Antriebswelle (4) andererseits eine Führungsbuchse (26) vorgesehen ist, an der die Messerkopfaufnahme und/oder Antriebswelle (4) durch zumindest ein Radiallager (27) in Form eines Wälz- und/oder Gleitlagers radial abgestützt ist, wobei die genannte Führungsbuchse (26) im Schneidkammergehäuse (22) axial verschieblich geführt ist, insbesondere durch Gleitlager (28) axial verschieblich gelagert ist und durch zumindest eine Dichtung (29), insbesondere in Form eines Dichtrings, gegenüber dem Schneidkammergehäuse (22) abgedichtet ist.

12. Granulierer nach dem vorhergehenden Anspruch, wobei zwischen der genannten Führungsbuchse (26) einerseits und der Messerkopfaufnahme und/oder der Antriebswelle (4) andererseits eine Gleitringdichtung (30) vorgesehen ist, die vorzugsweise an der Messerkopfaufnahme, die mit der genannten Antriebswelle (4) drehfest verbunden ist, montiert ist.

13. Granulierer nach einem der vorhergehenden Ansprüche, wobei die Zustellvorrichtung (6) eine Steuervorrichtung (40) zum Ansteuern des Servomotors (10) in Abhängigkeit zumindest eines Prozess- und/oder Anlagenparameters aufweist.

14. Granulierer nach dem vorhergehenden Anspruch, wobei die Steuervorrichtung (40) einen Automatikmodus aufweist, in dem die Position des Messerkopfs (2) relativ zum Lochkorpus (3) in Abhängigkeit des zumindest einen Prozess- und/oder Anlagenparameters automatisch eingestellt wird, insbesondere automatisch auf den Lochkorpus (3) gefahren oder vom Lochkorpus (3) weggefahren wird.

15. Granulierer nach einem der beiden vorhergehenden Ansprüche, wobei eine Erfassungsvorrichtung zum Erfassen von Verschleißerscheinungen am Messerkopf (2) und/oder am Lochkorpus (3) vorgesehen ist, wobei die Steuervorrichtung (40)
- dazu ausgebildet ist, den Servomotor (10) zum Anpassen der Messerkopfstellung an die erfassten Verschleißerscheinungen in Abhängigkeit eines Signals der Verschleißerfassungseinrichtung anzusteuern, insbesondere bei Messerverschleiß den Messerkopf (2) weiter zuzustellen, und/oder
- Einstellmittel zum Einstellen der Zustellkraft des Messerkopfs (2) gegen den Lochkorpus (3) aufweist, wobei die genannten Einstellmittel einen Automatikmodus aufweisen, in dem in Abhängigkeit eines manuell eingebbaren und/oder sensorisch erfassten Rezeptursignals, das die Rezeptur des zu granulierenden Materials charakterisiert, der Servomotor (10) zum Einstellen der zur Rezeptur passenden Zustellkräfte angesteuert wird, und/oder
- dazu ausgebildet ist, die Zustellung des Messerkopfs (2) durch Ansteuern des Servomotors (10) in Abhängigkeit von zumindest einem der folgenden Parameter automatisch zu steuern: einem Drehmoment des Antriebsmotors (5), einen Drehmoment des Servomotors (10), einer Zustellgeschwindigkeit und/oder einer Zustellung in Weg/Zeit.

## Claims

1. A pelletizer with a rotatably drivable cutter head (2) for dividing material strands output from a die plate (3) into pellets, wherein this cutter head (2) is drivingly connected to a drive motor (5) via a drive shaft (4), as well as with a feed device (6) for axial adjustment of the cutter head (2) relative to the die head (3) in the direction of the cutter head axis of rotation (12), the feed device (6) comprising a spindle drive stage (7) the tube nut (8) of which is rotatably adjustable by a servomotor (10) via a gear stage (11), wherein said drive shaft is connected to the cutter head (5) in an axially fixed and rotationally fixed manner, **characterized in that** a spindle element (9) connected to the tubular nut (8) in a geared manner is axially adjustable, wherein the spindle element (9) is configured as a spindle sleeve, which is seated axially fixed between the drive motor (5) and the cutter head (2) on the rotating drive shaft (4), wherein said drive shaft transmits the axial movement of the spindle sleeve to the cutter head (2).

2. The pelletizer according to the preceding claim, wherein the tube nut (8) is rotatably but axially fixedly mounted on a housing assembly and/or chassis assembly (13), wherein the spindle element (9) is axially adjustably but in a rotational fixed manner mounted on the housing assembly and/or chassis assembly (13), and wherein the drive shaft (4) is axially fixedly but rotatably held on the spindle element (9).

3. The pelletizer according to any of the preceding claims, wherein a bearing assembly (16) for rotatable, axially fixed mounting of the tube nut (8) is axially spaced in the direction of the cutter head axis of rotation (12) from a bearing assembly (15) for axially fixed, rotatable mounting of the spindle element (15) on the drive shaft (4) and/or from a bearing assembly (17) for axially adjustably mounting of the spindle element in rotationally fixed manner (9).

4. The pelletizer according to any of the preceding claims , wherein the spindle drive stage (7)
- is configured as a planetary thread drive, wherein planetary thread rolls (14) are provided between the tube nut (8) and the spindle element (9) for converting a rotational movement of the tube nut (8) into an axial movement of the spindle element (9),
- is configured as a ball screw drive, wherein balls are provided between the tube nut (8) and the spindle element (9) for converting a rotational movement of the tube nut (8) into an axial movement of the spindle element (9),
- is configured as a threaded engagement drive, wherein an internal thread provided on the tube nut (8) meshes with an external thread of the spindle element (9).

5. The pelletizer according to any of the preceding claims, wherein the gear stage (11) between the servomotor (10) and the tube nut (8) comprises a chain stage or a belt stage (18), in particular a toothed belt stage, wherein said chain stage or a belt stage (18) has a drive gear, in particular pinion (19) which is connected to the tube nut (15) at an end face of the tube nut (8) in a rotationally fixed manner, and preferably an additional gear stage (20) is provided between said chain stage or a belt stage (18) and the servomotor (10), preferably integrated into the servomotor (10).

6. The pelletizer according to any of claims 1 to 4, wherein the gear stage (11) between the servo motor (10) and the tube nut (8) comprises a contactlessly operating magnetic gear stage and/or a clutch stage for transmitting the rotational torque and driving motion from the servomotor (10) to the tube nut (8), wherein the magnetic gear stage and/or the clutch stage is configured to be electrodynamic, operating with eddy currents.

7. The pelletizer according to any of the preceding claims, wherein the servomotor (10) is arranged transversely offset from the drive shaft (4) and/or is aligned with its servomotor shaft parallel to the drive shaft (4).

8. The pelletizer according to any of the preceding claims, wherein a securing brake (21) is provided for rotationally locking the tube nut (8) and/or for axially locking the spindle element (9), wherein the securing brake (21) is in particular configured to lock the servomotor (10).

9. The pelletizer according to any one of the preceding claims, wherein the axially adjustably, rotationally drivable drive shaft (4) and/or a cutter head receptacle connected thereto is axially displaceably, rotatably mounted in a cutting chamber housing (22) which bounds a cutting chamber (23) in which the cutter head (2) is received, wherein a bearing assembly (24) between the cutting chamber housing (22) on the one hand and the cutter head receptacle and/or the drive shaft (4) on the other hand provides radial support of the cutter head receptacle and/or the drive shaft (4) on the cutting chamber housing (22).

10. The pelletizer according to any of the two preceding claims, wherein a sealing assembly (25) is provided between the cutter head receptacle and/or drive shaft (4) on the one hand and the cutting chamber housing (22) on the other hand for sealing the cutting chamber (23) in the region between the cutter head receptacle and/or drive shaft (4) on the one hand and the cutting chamber housing (22) on the other hand, wherein said sealing assembly (25) is configured to allow axial movements and rotational movements of the cutter head receptacle and/or drive shaft (4).

11. The pelletizer according to any of the preceding claims, wherein between the cutting chamber housing (22) on the one hand and the cutter head receptacle and/or drive shaft (4) on the other hand a guide bushing (26) is provided, on which the cutter head receptacle and/or drive shaft (4) is radially supported by at least one radial bearing (27) in the form of a rolling bearing and/or a sliding bearing, wherein said guide bushing (26) is guided axially adjustably in the cutting chamber housing (22), is mounted axially adjustably in particular by sliding bearings (28), and is sealed with respect to the cutting chamber housing (22) by at least one seal (29), in particular in the form of a sealing ring.

12. The pelletizer according to the preceding claim, wherein a slide ring seal (30) is provided between said guide bushing (26) on the one hand and the cutter head receptacle and/or the drive shaft (4) on the other hand, which seal is preferably mounted on the cutter head receptacle which is connected to said drive shaft (4) in a rotationally fixed manner.

13. The pelletizer according to any of the preceding claims, wherein the feed device (6) comprises a control device (40) for controlling the servomotor (10) in dependence on at least one process parameter and/or one system parameter.

14. The pelletizer according to the preceding claim, wherein the control device (40) has an automatic mode in which the position of the cutter head (2) relative to the die plate (3) is automatically adjusted in dependence on the at least one process parameter and/or one system parameter, in particular is automatically moved onto the die plate (3) or moved away from the die body (3).

15. The pelletizer according to any of the two preceding claims, wherein a detection device is provided for detecting signs of wear on the cutter head (2) and/or on the die plate (3), wherein the control device (40)
- is configured to control the servomotor (10) for adapting the cutter head position to the detected signs of wear in dependence on a signal from the wear detection device, in particular to advance the cutter head (2) further in the event of cutter wear and/or
- setting means for setting the feed force of the cutter head (2) against the die plate (3), said setting means having an automatic mode in which, in dependence of a manually inputtable and/or sensor-sensable recipe signal characterizing the recipe of the material to be pelletized, the servomotor (10) is controlled to set the feed forces matching the recipe and/or
- is configured to automatically control the feeding of the cutter head (2) by driving the servomotor (10) in dependence of at least one of the following parameters: a rotational torque of the drive motor (5), a rotational torque of the servomotor (10), an in-feed speed and/or an in-feed in travel/time.

## Revendications

1. Granulateur avec une tête à lame (2) pouvant être entraînée en rotation pour découper en granulés des cordons de matière sortant d'un corps perforé (3), la tête à lame (2) étant reliée en entraînement à un moteur d'entraînement (5) par le biais d'un arbre d'entraînement (4), ainsi qu'avec un dispositif d'avance (6) pour le réglage axial de la tête à lame (2) par rapport au corps perforé (3) dans la direction de l'axe de rotation (12) de la tête à lame, le dispositif d'avance (6) comprenant un étage d'entraînement à broche (7) dont l'écrou tubulaire (8) peut être réglé en rotation par un servomoteur (10) par le biais d'un étage de transmission (11), l'arbre d'entraînement (4) étant relié de manière axialement fixe et solidaire en rotation à la tête à lame (5), **caractérisé en ce qu'**un élément de broche (9) relié en transmission à l'écrou tubulaire (8) peut être réglé axialement, l'élément de broche (9) étant configuré sous forme de douille de broche qui repose de manière axialement fixe sur l'arbre d'entraînement rotatif (4) entre le moteur d'entraînement (5) et la tête à lame (2), ledit arbre d'entraînement transmettant le déplacement axial de la douille de broche à la tête à lame (2).

2. Granulateur selon la revendication précédente, dans lequel l'écrou tubulaire (8) est monté de manière rotative, mais axialement fixe, sur un ensemble de boîtier et/ou de châssis (13), dans lequel l'élément de broche (9) est monté sur l'ensemble de boîtier et/ou de châssis (13) de manière axialement coulissante, mais solidaire en rotation, et dans lequel l'arbre d'entraînement (4) est maintenu de manière axialement fixe, mais rotative, sur l'élément de broche (9).

3. Granulateur selon l'une quelconque des revendications précédentes, dans lequel un ensemble de palier (16) pour supporter l'écrou tubulaire (8) de manière rotative, axialement fixe est espacé axialement dans la direction de l'axe de rotation de la tête à lame (12) d'un ensemble de palier (15) pour supporter l'élément de broche (15) de manière axialement fixe, rotative sur l'arbre d'entraînement (4) et/ou d'un ensemble de palier (17) pour supporter l'élément de broche (9) de manière axialement coulissante, solidaire en rotation.

4. Granulateur selon l'une quelconque des revendications précédentes, dans lequel l'étage d'entraînement de broche (7)
- est configuré sous forme d'entraînement à vis planétaire, des rouleaux à vis planétaire (14) étant prévus entre l'écrou tubulaire (8) et l'élément de broche (9) pour convertir un mouvement de rotation de l'écrou tubulaire (8) en un mouvement axial de l'élément de broche (9), ou
- est configuré sous forme d'entraînement à vis sphérique, des billes étant prévues entre l'écrou tubulaire (8) et l'élément de broche (9) pour convertir un mouvement de rotation de l'écrou tubulaire (8) en un mouvement axial de l'élément de broche (9), ou
- est configuré sous forme d'entraînement à engagement par filetage, un filetage intérieur prévu sur l'écrou tubulaire (8) s'engrenant avec un filetage extérieur de l'élément de broche (9).

5. Granulateur selon l'une quelconque des revendications précédentes, dans lequel l'étage de transmission (11) comprend, entre le servomoteur (10) et l'écrou tubulaire (8), un étage à chaîne ou à courroie (18), notamment un étage à courroie crantée, ledit étage à chaîne ou à courroie (18) comprenant une roue d'entraînement, notamment un pignon d'entraînement (19), qui est de préférence relié de manière solidaire en rotation à l'écrou tubulaire (15) sur un côté frontal de l'écrou tubulaire (8), et de préférence un étage de transmission supplémentaire (20) est prévu entre ledit étage de chaîne ou de courroie (18) et le servomoteur (10), de préférence intégré dans le servomoteur (10).

6. Granulateur selon l'une quelconque des revendications 1 à 4, dans lequel l'étage de transmission (11) présente, entre le servomoteur (10) et l'écrou tubulaire (8), un étage de transmission et/ou d'accouplement magnétique fonctionnant sans contact pour transmettre le couple de rotation et le mouvement d'entraînement du servomoteur (10) à l'écrou tubulaire (8), l'étage de transmission et/ou d'accouplement magnétique étant notamment configuré pour fonctionner de manière électrodynamique, avec des courants de Foucault.

7. Granulateur selon l'une quelconque des revendications précédentes, dans lequel le servomoteur (10) est agencé décalé transversalement par rapport à l'arbre d'entraînement (4) et/ou est orienté avec son arbre de servomoteur parallèle à l'arbre d'entraînement (4).

8. Granulateur selon l'une quelconque des revendications précédentes, dans lequel un frein de maintien (21) est prévu pour bloquer en rotation l'écrou tubulaire (8) et/ou pour bloquer axialement l'élément de broche (9), le frein de maintien (21) étant notamment configuré pour bloquer le servomoteur (10).

9. Granulateur selon l'une quelconque des revendications précédentes, dans lequel l'arbre d'entraînement (4) réglable axialement, pouvant être entraîné en rotation et/ou un logement de tête à lame qui lui est relié est monté de manière axialement coulissante, rotative dans un boîtier de chambre de coupe (22) qui délimite une chambre de coupe (23) dans laquelle est reçue la tête à lame (2), un ensemble de palier (24) entre le boîtier de chambre de coupe (22) d'une part et le logement de tête à lame et/ou l'arbre d'entraînement (4) d'autre part permettant de soutenir radialement le logement de tête à lame et/ou l'arbre d'entraînement (4) sur le boîtier de chambre de coupe (22).

10. Granulateur selon l'une quelconque des deux revendications précédentes, dans lequel un ensemble d'étanchéité (25) est prévu entre le logement de tête à lame et/ou l'arbre d'entraînement (4) d'une part et le boîtier de chambre de coupe (22) d'autre part, pour assurer l'étanchéité de la chambre de coupe (23) dans la zone entre le logement de tête à lame et/ou l'arbre d'entraînement (4) d'une part et le boîtier de chambre de coupe (22) d'autre part, ledit ensemble d'étanchéité (25) étant configuré pour permettre des mouvements axiaux et des mouvements de rotation du logement de tête à lame et/ou de l'arbre d'entraînement (4).

11. Granulateur selon l'une quelconque des revendications précédentes, dans lequel il est prévu entre le boîtier de chambre de coupe (22) d'une part et le logement de tête à lame et/ou l'arbre d'entraînement (4) d'autre part un manchon de guidage (26) sur lequel le logement de tête à lame et/ou l'arbre d'entraînement (4) s'appuie radialement par au moins un palier radial (27) sous la forme d'un palier à roulement et/ou d'un palier lisse, ledit manchon de guidage (26) étant guidé de manière axialement coulissante dans le boîtier de chambre de coupe (22), étant notamment supporté de manière axialement coulissante par des paliers lisses (28) et étant rendu étanche par rapport au boîtier de chambre de coupe (22) par au moins un joint d'étanchéité (29), notamment sous la forme d'une bague d'étanchéité.

12. Granulateur selon la revendication précédente, dans lequel il est prévu entre ledit manchon de guidage (26) d'une part et le logement de tête à lame et/ou l'arbre d'entraînement (4) d'autre part, une garniture mécanique d'étanchéité (30), qui est montée de préférence sur le logement de tête à lame qui est relié de manière solidaire en rotation audit arbre d'entraînement (4).

13. Granulateur selon l'une quelconque des revendications précédentes, dans lequel le dispositif d'avance (6) présente un dispositif de commande (40) pour commander le servomoteur (10) en fonction d'au moins un paramètre du processus et/ou de l'installation.

14. Granulateur selon la revendication précédente, dans lequel le dispositif de commande (40) présente un mode automatique dans lequel la position de la tête à lame (2) par rapport au corps perforé (3) est ajustée automatiquement en fonction de l'au moins un paramètre du processus et/ou de l'installation, notamment est déplacée automatiquement sur le corps perforé (3) ou est éloignée du corps perforé (3).

15. Granulateur selon l'une quelconque des deux revendications précédentes, dans lequel il est prévu un dispositif de détection pour détecter des phénomènes d'usure sur la tête à lame (2) et/ou sur le corps perforé (3), dans lequel le dispositif de commande (40)
- est configuré pour commander le servomoteur (10) afin d'adapter la position de la tête à lame aux phénomènes d'usure détectés en fonction d'un signal du dispositif de détection d'usure, notamment pour continuer à avancer la tête à lame (2) en cas d'usure des lame, et/ou
- présente des moyens d'ajustement pour ajuster la force d'avance de la tête à lame (2) contre le corps perforé (3), lesdits moyens d'ajustement présentant un mode automatique, dans lequel, en fonction d'un signal de formulation pouvant être introduit manuellement et/ou détecté par capteur, qui caractérise la formulation du matériau à granuler, le servomoteur (10) est commandé pour ajuster les forces d'avance adaptées à la formulation, et/ou
- est configuré pour commander automatiquement l'avance de la tête à lame (2) en commandant le servomoteur (10) en fonction d'au moins l'un des paramètres suivants : un couple de rotation du moteur d'entraînement (5), un couple de rotation du servomoteur (10), une vitesse d'avance et/ou une avance en distance/temps.
